# EUROPEAN PATENT APPLICATION

(11) **EP 1 717 891 A1**
(43) Date of publication of application: **02.11.2006**
(21) Application number: 05252628.2
(22) Date of filing: 27.04.2005
(51) Int. Cl.: H01M 8/02

(54) **Fluid channel structure for polar plate of fuel cell**

(71) Applicant: Institute of Nuclear Energy Research, Lungtan Taoyuan, Taiwan 325 (TW)
(72) Inventor: Chen, Charn-Ying, Taoyuan, Taiwan 325 (TW); Yang, Peng, Taoyuan, Taiwan 325 (TW); Lin, Yeong-Der, Taoyuan, Taiwan 325 (TW); Lee, Ying-Sheng, Taoyuan, Taiwan 325 (TW); Lin, Kin-Fu, Taoyuan, Taiwan 325 (TW)
(74) Representative: Dearing-Lambert, Peter Richard

(57) **Abstract**

A fluid channel structure for polar plate (2, 2a, 2b, 2c) of fuel cell includes a plurality of parallel passages (23) provided in a reaction area of a polar plate (2, 2a, 2b, 2c), two through holes of fluid inlet (21) and outlet (22) provided on the polar plate (2, 2a, 2b, 2c), a plurality of communicating channels (231, 232) connecting the through holes (21, 22) to two ends of the passages (23), and a plurality of tunnels (24, 24a, 24b, 24c) formed between the communicating channels (231) and each of the through holes (21, 22). The tunnels (24, 24a, 24b, 24c) are formed by closing a top cover (25, 25a, 25b, 25c) onto a locating zone (241) formed on the polar plate (2, 2a, 2b, 2c) near the through hole (21, 22), so that slots (251) formed at a lower side of the top cover (25, 25a, 25b, 25c) are aligned with horizontal groove sections (242) and vertical step sections (243) formed in the locating zone (241) to form the tunnels (24, 24a, 24b, 24c). The top cover (25, 25a, 25b, 25c) bears a relatively large fluid pressure, enabling the fluid channel structure to transfer sufficient reactant fluid to the polar plate (2, 2a, 2b, 2c) without the risk of leaking.

## Description

### FIELD OF THE INVENTION

The present invention relates to a structural design with respect to a fuel cell, and more particularly to a fluid channel structure for polar plate of a fuel cell.

### BACKGROUND OF THE INVENTION

A fuel cell is a power-generating unit that generates electrical energy through electrochemical reaction of hydrogen-containing fuel and air. For the fuel cell to generate electrochemical reaction, it is necessary to supply anode reactant gas or liquid and cathode reactant gas to the fuel cell via proper channels. The channels for supplying such reactant gas or liquid to the fuel cell must be so designed that the anode and the cathode fluids are absolutely isolated from each other without leaking out of the channels, so as to avoid adverse influences on the working efficiency of the fuel cell and to ensure the safety in use of the fuel cell.

Typically, a plurality of fuel cell units are included in a fuel cell stack. Each of the fuel cell units mainly includes a membrane electrode assembly (MEA) that consists of a proton exchange membrane, an anode catalyst layer, and a cathode catalyst layer. An anode gas diffusion layer and a polar plate are connected to an anode side of the membrane electrode assembly, and a cathode gas diffusion layer and a polar plate are connected to a cathode side of the membrane electrode assembly.

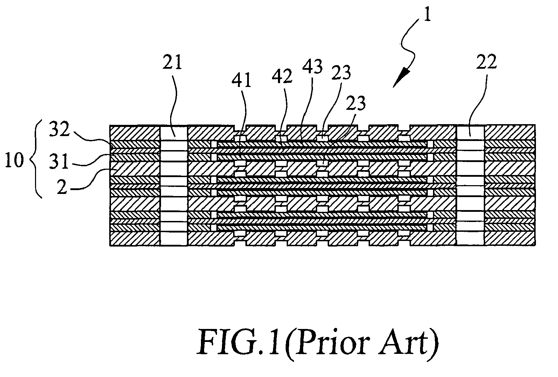

Fig. 1 is a sectioned side view of a typical fuel cell stack 1. As shown, the fuel cell stack 1 includes a plurality of polar plates 2, each of which is correspondingly provided near two diagonally opposite ends with a through hole 21, 22 each for serving as reactant fluid inlet and outlet, respectively. The reactant fluids may be hydrogen, air, or a certain type of petrochemical fuel, such as methyl alcohol, depending on the type of the fuel cell system.

The polar plate 2 is provided in a central area of at least one surface with a plurality of parallel passages 23, each of which has a first end communicating with the through hole 21 via a communicating channel, and a second end with the through hole 22 via another communicating channel. When the reactant fluid is supplied via the through hole 21, it is guided by the passages 23 to flow to the through hole 22.

An anode diffusion layer 41, a membrane electrode assembly 42, and a cathode diffusion layer 43 are sandwiched between two adjacent polar plates 2. The membrane electrode assembly 42 is provided at two opposite side surfaces with a catalyst layer each (not shown). There are also two gaskets 31, 32 sandwiched between two adjacent polar plates 2. The polar plates 2, the anode diffusion layers 41, the membrane electrode assemblies 42, the cathode diffusion layers 43, and the gaskets 31, 32 are stacked in a predetermined manner to form a basic fuel cell unit 10.

Most prior patented techniques in connection with the smooth guidance of the reactant fluid by the polar plate involve in the structural design of the fluid passages and channels on the polar plate. For example, US Patent No. 4,631,239 discloses a fluid passage structure, in which a plurality of parallelly spaced passages are arranged on the polar plate; US Patent No. 6,761,990 discloses a fuel cell structure, in which a plurality of parallelly spaced passages are arranged on the surfaces of the polar plate; and US Patent No. 6,623,882 discloses a fluid passage structure for fuel cell having a reduced passage bore to produce a pressure difference between an inlet and an outlet of the fluid passage.

While these prior patented techniques provide the expected function of guiding and transferring the reactant fluid, they do not disclose any communicating structure between the fluid passages and the through holes via which the fluid flows into and out of the fluid passages on the polar plate of the fuel cell. In a conventional communicating channel structure for the polar plate of the fuel cell, a plurality of communicating channels are directly formed on the surface of the polar plate, and a gasket is sandwiched between two adjacent polar plates to isolate the anode fluid from the cathode fluid and prevent leakage of the reactant fluid when it is supplied through the through holes and the communicating channels on the polar plates.

Moreover, the reactant fluid supplied to the fuel cell stack has relatively high fluid pressure. Therefore, when the reactant fluid flows through the communicating channels on the polar plates, it exerts a significant pressure on the gaskets to form depressions on the gaskets, resulting in leakage of reactant gas or liquid from the communicating channels at the depressed gaskets and even damaged membrane electrode assembly.

Furthermore, the polar plates are generally carbon plates, high molecular composite carbon plates, or metal or alloy plates. While there are many different types of materials available for making the polar plates, the selection of the material for the polar plates is often subjected to the type of reactant fluid, the fluid pressure, etc. in different applications. For example, when the whole fuel cell has a reduced volume, the problem of fluid leakage is worsened.

It is therefore necessary to develop a fluid channel structure for polar plate of fuel cell that provides good leak-proof effect and allows sufficient flow of fluid therethrough to overcome the problems existed in the conventional techniques.

### SUMMARY OF THE INVENTION

A primary object of the present invention is to provide a fluid channel structure for polar plate of fuel cell, so that fluids required in the electrochemical reaction of the fuel cell stack flow through the channel structure without leaking therefrom.

Another object of the present invention is to provide a fluid channel structure for polar plate of fuel cell that includes a plurality of communicating channels between through holes of fluid inlet and outlet on the polar plate and fluid passages in a reaction zone on the polar plates of fuel cell, and a plurality of tunnels formed on the polar plate to communicate the through holes with the communicating channels.

A further object of the present invention is to provide a fluid channel structure for polar plate of fuel cell that can be easily formed on the polar plate.

In the present invention, the tunnels are formed by providing on the polar plate with a locating zone having a plurality of horizontal groove sections and vertical step sections formed therein, and on a top of the locating zone with a top cover. When the top cover is closed onto the locating zone, half-profile slots formed at a lower side of the top cover are aligned with the horizontal groove sections to form the tunnels.

The fluid channel structure with the tunnels has good fluid transfer function, good leak-proof effect, and improved structural strength. The top cover forms an upper part of the tunnels to bear relatively large fluid pressure, enabling the fluid channel structure to provide sufficient flow of reactant fluid to the polar plate of the fuel cell without increasing the thickness of the polar plate.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a sectioned side view of a typical fuel cell stack;
Fig. 2 is an exploded perspective view showing a fluid channel structure for polar plate of fuel cell according to a first embodiment of the present invention;
Fig. 3 is an enlarged view of the encircled area A of Fig. 2;
Fig. 4 is similar to Fig. 3 showing an internal structure of the fluid channel structure of the present invention;
Fig. 5 is similar to Fig. 4 but viewed from another viewing angle;
Fig. 6 is a sectional view taken along line 6-6 of Fig. 3;
Fig. 7 is a sectional view taken along line 7-7 of Fig. 3 showing the tunnels in the first embodiment of the present invention;
Fig. 8 is a sectional view taken along line 8-8 of Fig. 3;
Fig. 9 is a sectional view showing the tunnels in a second embodiment of the present invention;
Fig. 10 is a sectional view showing the tunnel in a third embodiment of the present invention; and
Fig. 11 is a sectional view showing the tunnel in a fourth embodiment of the present invention.

### DETAILED DESCRIPTION OF THE PREFERRED EMBODIMENTS

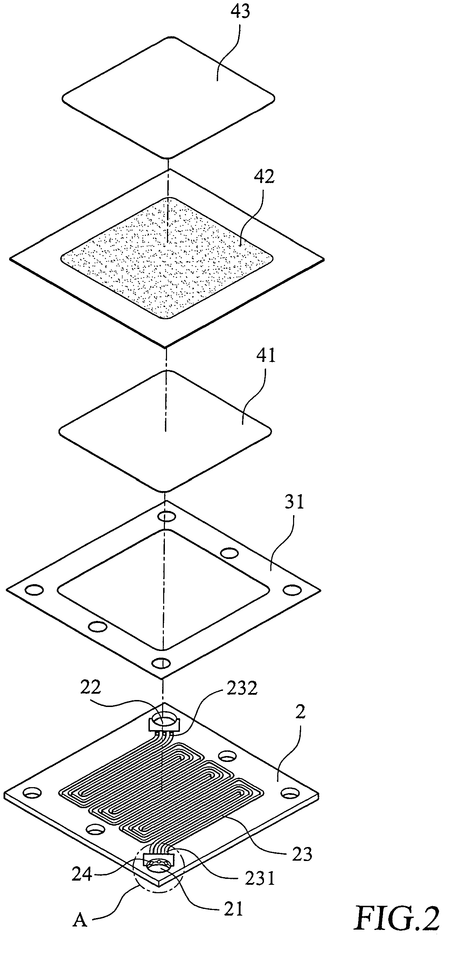

Please refer to Fig. 2 that is an exploded perspective view showing relevant components included in a fluid channel structure for polar plate of fuel cell according to a first embodiment of the present invention. As shown, a polar plate 2, which is included in a fuel cell stack, is correspondingly provided near two diagonally opposite ends with a through hole 21, 22 each to serve as a fluid inlet and a fluid outlet, respectively. The reactant fluid supplied to the polar plate 2 via the through holes of fluid inlet 21 and the fluid outlet 22 may be hydrogen, air, or a type of petrochemical fuel, such as methyl alcohol.

A gasket 31, an anode diffusion layer 41, a membrane electrode assembly 42, and a cathode diffusion layer 43 are sequentially superposed on one surface of the polar plate 2 from bottom to top. Two catalyst layers (not shown) are separately provided on two side surfaces of the membrane electrode assembly 42.

The polar plate 2 is provided within a central reactant area on its surface with a plurality of parallel passages 23, each of which has a first end communicable with the through hole of fluid inlet 21 via a corresponding communicating channel 231 and a corresponding tunnel 24, and a second end communicable with the through hole of fluid outlet 22 via a corresponding communicating channel 232 and a corresponding tunnel 24. When the reactant fluid is supplied into the polar plate 2 via the through hole of fluid inlet 21, it is guided by the passages 23 to finally flow to the through hole of fluid outlet 22.

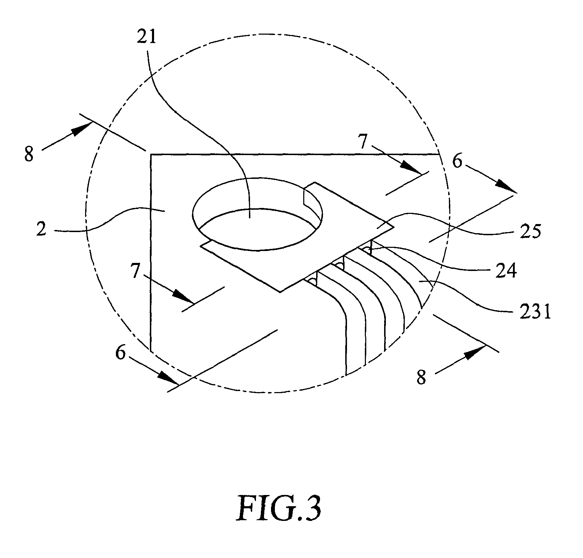

As can be clearly seen from Fig. 3, which is an enlarged view of the encircled area A of Fig. 2, each of the communicating channels 231 is communicable with the through hole of fluid inlet 21 via a corresponding tunnel 24 horizontally extending through the polar plate 2. When the fluid is supplied into the through hole of fluid inlet 21, it evenly flows through the tunnels 24 and the communicating channels 231 into the passages 23 on the polar plate 2.

In the first embodiment of the present invention, the tunnels 24 are formed on the polar plate 2 by way of forming a locating zone 241 on the surface of the polar plate 2 at an area in the vicinity of the through hole 21. The locating zone 241 has a width larger than a total width of all the communicating channels 231.

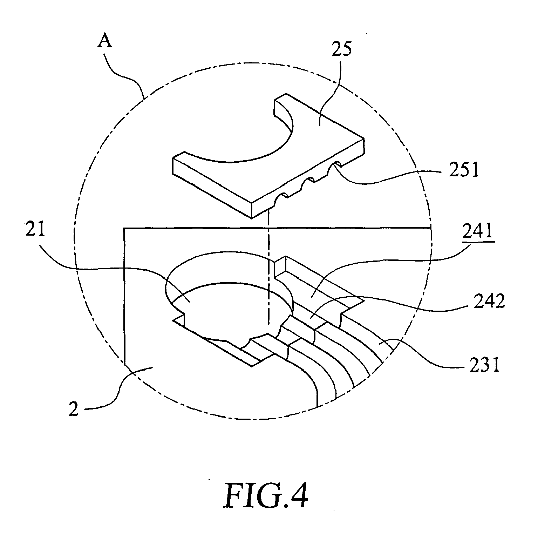

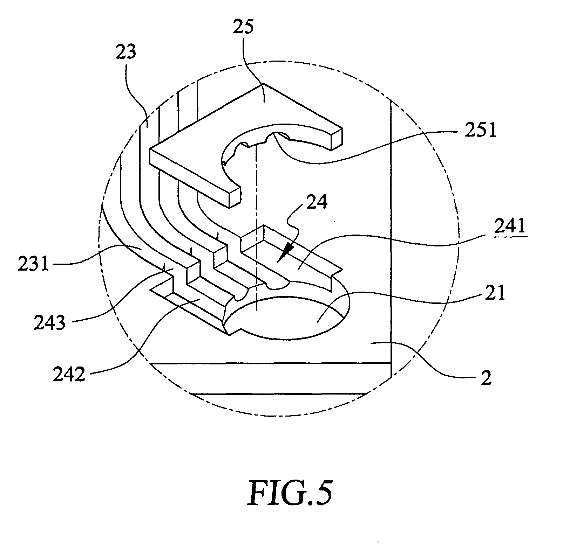

A top cover 25 is closed to a top of the locating zone 241. The top cover 25 is provided at a lower side with a plurality of half-profile slots 251, as can be seen from Fig. 4, which is also an enlarged view of the encircled area A of Fig. 2 with the top cover 25 separated from the polar plate 2 to show the locating zone 241. Fig. 5 is similar to Fig. 4 but viewed from another viewing angle.

As can be clearly seen from Figs. 4 and 5, a plurality of horizontal groove sections 242 are formed in the locating zone 241. The horizontal groove section 242 and the half-profile slot 251 have the same cross-sectional shape. Each of the horizontal groove sections 242 has an end communicating with the through hole of fluid inlet 21, and the other opposite end communicating with a corresponding communicating channel 231 via a vertical step section 243.

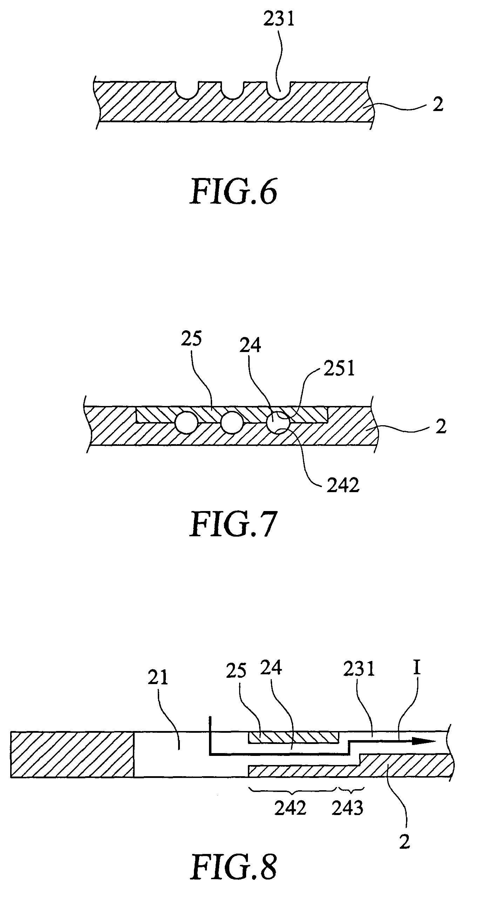

When the top cover 25 is closed to the top of the locating zone 241, the half-profile slots 251 at the lower side of the top cover 25 are separately aligned with corresponding horizontal groove sections 242 in the locating zone 241 on the polar plate 2 to form the a plurality of tunnels 24. Fig. 6 is a sectional view taken along line 6-6 of Fig. 3, and Fig. 7 is a sectional view taken along line 7-7 of Fig. 3 showing the tunnels 24.

As can be clearly seen from Fig. 8, which is a sectional view taken along line 8-8 of Fig. 3, an amount of reactant fluid I supplied into the through hole of fluid inlet 21 would sequentially flow through the tunnels 24 formed from the half-profile slots 251 of the top cover 25 and the horizontal groove sections 242 in the locating zone 241 on the polar plate 2, the vertical step sections 243, and the communicating channels 231 into the passages 23.

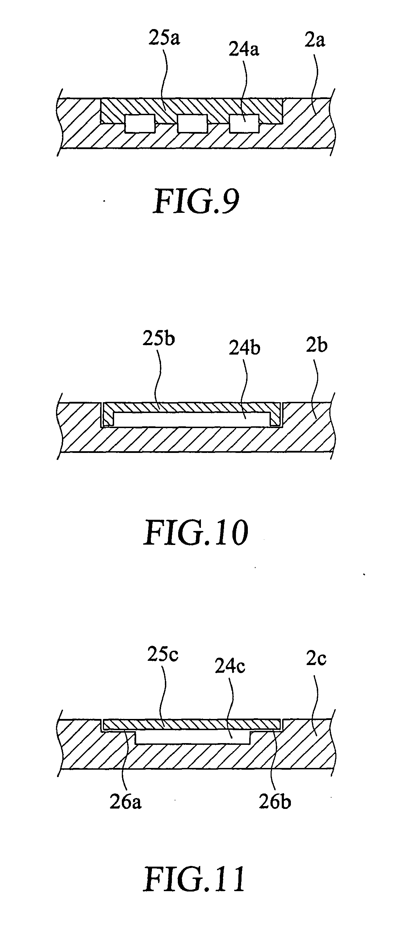

Please refer to Fig. 9 that is a sectional view showing a plurality of tunnels 24a according to a second embodiment of the present invention. The tunnels 24a in the second embodiment are generally structurally similar to the tunnels 24 in the first embodiment shown in Fig. 7 but have a rectangular cross section. That is, the tunnels 24a are formed by aligning a plurality of half-rectangular horizontal groove sections provided on a polar plate 2a with a plurality of half-rectangular slots correspondingly provided at the lower side of a top cover 25a.

Please refer to Fig. 10 that is a sectional view showing a tunnel 24b according to a third embodiment of the present invention. As the tunnels 24a in the second embodiment shown in Fig. 9, the tunnel 24b in the third embodiment has a rectangular cross section. However, it is noted only one single tunnel 24b is provided in the third embodiment of the present invention. More specifically, the one single tunnel 24b is formed by aligning a half-rectangular horizontal groove section provided on a polar plate 2b with a half-rectangular slot correspondingly provided at the lower side of a top cover 25b.

Please refer to Fig. 11 that is a sectional view showing a tunnel 24c according to a fourth embodiment of the present invention. As in the third embodiment of the present invention shown in Fig. 10, there is only one single rectangle-sectioned tunnel 24c in the fourth embodiment. However, it is noted that the one single tunnel 24c is formed by closing a top cover 25c having a completely flat lower side onto a rectangular horizontal groove section provided on a polar plate 2c, and that the rectangular horizontal groove section on the polar plate 2c is provided at two lateral ends with a supporting shoulder 26a, 26b each to support two lateral ends of the top cover 25c closed thereto.

Although the present invention has been described with reference to the polar plate in one fuel cell unit, it is understood the present invention is also applicable to a fuel cell stack consisting of a plurality of fuel cell units.

The tunnel or tunnels formed by closing the top cover onto the locating zone on the polar plate enables the communicating channels between the through holes of fluid inlet and outlet and the passages in the reaction area on the polar plate to have good fluid transfer function, good leak-proof effect, and improved structural strength. Moreover, the present invention can be very easily produced and processed simply by forming general channel structure and corresponding top cover and aligning them with each other. In the fluid channel structure of the present invention, the top cover forming an upper part of the tunnels is able to bear relatively large fluid pressure, and a sufficient flow of reactant fluid can be supplied to the polar plate of the fuel cell without increasing the thickness of the polar plate.

## Claims

1. A fluid channel structure for a fuel cell, comprising at least one polar plate (2, 2a, 2b, 2c) in a fuel cell forming one unit of a fuel cell stack, the polar plate (2, 2a, 2b, 2c) being provided in a central area on at least one surface thereof with a plurality of parallel passages (23), each of the passages (23) having two ends communicating with two through holes (21, 22) formed at predetermined positions on the polar plate (2, 2a, 2b, 2c) via a plurality of communicating channels (231, 232), the two through holes (21, 22) separately serving as a fluid inlet (21) and a fluid outlet (22) for the polar plate (2, 2a, 2b); the fluid channel structure being **characterized in that** at least one tunnel (24, 24a, 24b, 24c) is formed between the communicating channels (231, 232) and each of the two through holes (21, 22);
the at least one tunnel (24, 24a, 24b, 24c) being formed by providing on the polar plate (2, 2a, 2b, 2c) in the vicinity of the through hole (21, 22) with a locating zone (241) having at least one horizontal groove section (242) formed therein, and on a top of the locating zone (241) with a separate top cover (25, 25a, 25b, 25c); the top cover (25, 25a, 25b, 25c) being provided at a lower side with at least one half-profile slot (251) having a sectional shape and a position corresponding to those of the horizontal groove section (242);
whereby when the top cover (25, 25a, 25b, 25c) is closed onto the top of the locating zone (241) with the at least one half-profile slot (251) aligned with the at least one horizontal groove section (242), the at least one tunnel (24, 24a. 24b, 24c) is formed for an amount of reactant fluid supplied into the through hole of fluid inlet (21) to sequentially flow through the at least one tunnel (24, 24a, 24b, 24c) and the a plurality of communicating channels (231) to the a plurality of passages (23) formed on the polar plate(2, 2a, 2b, 2c).

2. The fluid channel structure as claimed in claim 1, **characterized in that** the at least one tunnel (24, 24a, 24b, 24c) includes a vertical step section (243) formed on the polar plate (2, 2a, 2b), and the vertical step section (243) having an upper end communicating with a corresponding one of the a plurality of communicating channels (231), and a lower end communicating with a corresponding one of the at least one horizontal groove section (242).

3. The fluid channel structure as claimed in claim 1, **characterized in that** the at least one tunnel (24) has a round cross section.

4. The fluid channel structure as claimed in claim 1, **characterized in that** the at least one tunnel (24a) has a rectangular cross section.

5. The fluid channel structure as claimed in claim 1, **characterized in that** only one single tunnel (24b, 24c) having a rectangular cross section is formed on the polar plate (2b, 2c).

6. A fluid channel structure for a fuel cell, comprising at least one polar plate (2, 2a, 2b, 2c) in a fuel cell forming one unit of a fuel cell stack, the polar plate (2, 2a, 2b, 2c) being provided in a central area on at least one surface thereof with a plurality of parallel passages (23), each of the passages (23) having two ends communicating with two through holes (21, 22) formed on the polar plate (2, 2a, 2b, 2c) via a plurality of communicating channels (231, 232), the two through holes (21, 22) separately serving as a fluid inlet (21) and a fluid outlet (22) for the polar plate (2, 2a, 2b, 2c); the fluid channel structure being **characterized in that** at least one tunnel (24, 24a, 24b, 24c) is formed between the communicating channels (231, 232) and each of the two through holes (21, 22);
the at least one tunnel (24, 24a, 24b, 24c) including at least one horizontal groove section (242) having a first end extended through the polar plate (2, 2a, 2b, 2c) to communicate with the through hole (21, 22); and at least one vertical step section (243) formed in the polar plate (2, 2a, 2b, 2c) and having an upper end communicating with the communicating channels (231) on the polar plate (2, 2a, 2b, -2c) and a lower end communicating with a second end of the horizontal groove section (242) opposite to the first end;
whereby when an amount of reactant fluid is supplied into the through hole of fluid inlet (21), the reactant fluid sequentially flows through the at least one tunnel (24, 24a, 24b, 24c) and the a plurality of communicating channels (231) to the a plurality of passages (23) on the polar plate (2, 2a, 2b, 2c).

7. The fluid channel structure for polar plate (2, 2a, 2b, 2c) of fuel cell as claimed in claim 6, **characterized in that** the at least one tunnel (24) has a round cross section.

8. The fluid channel structure as claimed in claim 6, **characterized in that** the at least one tunnel (24a) has a rectangular cross section.

9. The fluid channel structure as claimed in claim 6, **characterized in that** only one single tunnel (24b, 24c) having a rectangular cross section is formed on the polar plate (2b, 2c).
